# EUROPEAN PATENT APPLICATION

(11) **EP 2 966 873 A1**
(43) Date of publication of application: **13.01.2016**
(21) Application number: 15176065.9
(22) Date of filing: 09.07.2015
(51) Int. Cl.: H04N 21/431, H04N 21/443, H04N 5/445, H04N 21/422, H04N 5/44, H04N 21/81, G06F 9/44

(54) **SYSTEM AND METHOD FOR CONTROLLING DIVIDED SCREENS INDEPENDENTLY THROUGH MAPPING WITH INPUT DEVICES**

(30) Priority: 09.07.2014 KR 20140086285
(71) Applicant: Humax Co., Ltd., Yongin-si 449-934 (KR)
(72) Inventor: Song, Dong Seop, 448-755 Yongin-si (KR)
(74) Representative: Zardi, Marco

(57) **Abstract**

Disclosed herein is a system and method for controlling divided screens, on which applications corresponding to input signals received from input devices are executed, independently through mapping with the input devices of different input types. The system includes an input unit, a control unit, and a display device that provides divided screens. If a first input signal for controlling a part of the divided screens is received from a first input device, or if a second input signal for controlling the screen is received from a second input device during reception of the first input signal, the system controls the divided screens mapped with the respective signals based on the received input signals. Accordingly, efficient function control can be performed through mapping of the divided screens with the input devices to meet the purposes and functions of the respective applications, and it becomes possible to enable a plurality of users to control the divided screens of the display device independently.

## Description

### BACKGROUND OF THE INVENTION

### Field of the Invention

Exemplary embodiments of the present invention relate to a system and method for controlling divided screens independently through mapping with input devices, and more particularly, to the independent control of divided screens through independent mapping with input devices corresponding to applications that are executed on the divided screens in a display device including the divided screens.

### Description of the Related Art

With the development of electronic communication technology, display devices for displaying images have been changed to display a plurality of images or execute applications on divided screens in addition to displaying of a single image. Further, changes of input devices have been emphasized for convenience in user's operation.

A smart TV (smart television) that has recently been produced and sold means a TV based on a network such as the Internet, and through the smart TV, not only a ground-wave broadcast, a cable broadcast, and a satellite broadcast can be viewed but also the Internet can be used. In the related art, an RF (Radio Frequency) remote controller has been used to control such a smart TV. Recently, in order to control applications that are displayed (executed) on a display device through the Internet, various input systems for recognizing user's motion using a camera mounted on a smart TV have been provided.

However, various applications provided through divided screens require corresponding optimized input devices. The screen control using the remote controller that is proposed in the related art is limited in user convenience and execution of application functions, and it is unable to simultaneously control the divided screens. Accordingly, there has been an urgent need for schemes for controlling the divided screens independently.

### SUMMARY OF THE INVENTION

In order to solve the above-described problems, an object of the present invention is to provide a system and method for executing various screen control functions of divided screens and mapped application control functions using different input devices.

Another object of the present invention is to provide a system and method for enabling two or more users to control divided screens simultaneously or successively using different input devices.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a system for controlling divided screens independently through mapping with input devices includes a signal reception unit configured to receive different input signals from the input devices; and a control unit configured to determine applications corresponding to the respective input signals and to control the divided screens related to the corresponding applications according to the input signals.

The control unit may be further configured to control the first divided screen related to the application corresponding to the first input device according to the first input signal from the first input device, and to control the second divided screen related to the application corresponding to the second input device that is different from the first input device according to the second input signal from the second input device.

The system according to the aspect of the present invention may further include a data storage unit configured to store a program for controlling the applications corresponding to the respective input signals.

The control unit may be further configured to control the second divided screen independently of the first divided screen if the second input signal is sensed while controlling the first divided screen according to the first input signal.

The control unit may be further configured to divide the entire screen that is controlled according to the first input signal into the first divided screen that is controlled by the first input signal and the second divided screen that is controlled by the second input signal in response to the second input signal if the second input signal is sensed while controlling the entire screen according to the first input signal.

The control unit may be further configured to process the first divided screen that is previously executed as a background and to make the second divided screen overlap the first divided screen to be displayed if the second divided screen is determined.

The control unit may adjust sizes or positions of the divided screens according to a divided screen change input signal.

The control unit may switch the position of the first divided screen with the position of the second divided screen according to a divided screen change input signal.

The input devices may include at least two different devices among a remote controller, a keypad, a set-top box, a keyboard, a mouse, a trackball, a scanner, a touchpad, a tablet, a camera, a joystick, a pointing device, and a mobile device.

The divided screens may be provided by at least one of a smart TV, an IPTV, a device provided with a set-top box and a video receiver, and a mobile display device.

The signal reception unit may be built in or may be detachably attached to a display device including the divided screens.

In accordance with another aspect of the present invention, a method for controlling divided screens independently through mapping with a plurality of input devices includes receiving a first input signal from the first input device and determining a first application corresponding to the first input signal and the first divided screen mapped with the first application; receiving a second input signal that is different from the first input signal from the second input device and determining a second application corresponding to the second input signal and the second divided screen mapped with the second application; and controlling the divided screens independently according to the input signals.

The method according to the aspect of the present invention may further include changing a mapped divided screen to another divided screen according to a screen change input signal.

The controlling may include controlling the second divided screen independently of the first divided screen if the second input signal is sensed while controlling the first divided screen according to the first input signal.

The determining of the second divided screen may include dividing the entire screen that is controlled according to the first input signal into the first divided screen that is controlled by the first input signal and the second divided screen that is controlled by the second input signal in response to the second input signal if the second input signal is sensed while controlling the entire screen according to the first input signal.

The determining of the second divided screen may include processing the first divided screen that is previously executed as a background and making the second divided screen overlap the first divided screen to be displayed if the second divided screen is determined.

The method according to the aspect of the present invention may further include adjusting sizes or positions of the divided screens according to a divided screen change input signal.

The method according to the aspect of the present invention may further include switching the position of the first divided screen with the position of the second divided screen according to a divided screen change input signal.

The first and second input devices may include at least two different devices among a remote controller, a keypad, a set-top box, a keyboard, a mouse, a trackball, a scanner, a touchpad, a tablet, a camera, a joystick, a pointing device, and a mobile device.

The divided screens may be provided by at least one of a smart TV, an IPTV, a device provided with a set-top box and a video receiver, and a mobile display device.

In accordance with another aspect of the present invention, a computer program for controlling divided screens independently through mapping with a plurality of input devices comprises instructions for causing a computer to receive a first input signal from a first input device and determining a first application corresponding to the first input signal and a first divided screen mapped with the first application; instructions for causing a computer to receive a second input signal that is different from the first input signal from a second input device and determining a second application corresponding to the second input signal and a second divided screen mapped with the second application; and instructions for causing a computer to control the divided screens independently according to the input signals.

According to the aspects of the present invention, the divided screens, on which the corresponding applications are displayed, can be independently controlled to meet the functions using the different input devices of different input types. Further, two or more users can control the functions of the divided screens simultaneously or successively.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is an exemplary block diagram illustrating the main configuration of a system for controlling divided screens according to an embodiment of the present invention;
FIG. 2 is a functional block diagram illustrating the configuration of a system for controlling divided screens according to different kinds of input devices according to an embodiment of the present invention;
FIG. 3 is a flowchart illustrating a method for controlling divided screens according to different kinds of input signals according to an embodiment of the present invention; and
FIG. 4 is a diagram exemplarily illustrating a situation in which divided screens of a display are independently controlled through a plurality of input devices according to an embodiment of the present invention.

### DESCRIPTION OF SPECIFIC EMBODIMENTS

Hereinafter, preferred embodiments of the present invention will be described in detail with reference to the accompanying drawings. First, in giving drawing reference numerals to constituent elements in the drawings, the same reference numerals are used for the same constituent elements across various figures. Further, in the following description of the present invention, a detailed description of known functions and configurations incorporated herein will be omitted when it may make the subject matter of the present invention rather unclear.

Various aspects of the present invention will be described below. It should be understood that the matters defined in the description, such as the detailed construction and elements, are nothing but exemplary details. It would be understood by one of ordinary skill in the art to which the present invention pertains that one aspect of the present invention presented herein may be implemented independently of any other aspect of the present invention and two or more aspects may be combined with each other in various ways on the basis of embodiments of the present invention presented herein. For example, an apparatus may be implemented or a method may be executed using a certain number of aspects explained herein. Further, such an apparatus may be implemented or such a method may be executed using other different structures, functions, or a combination thereof in addition to the one or more aspects explained herein.

In the entire description of the present invention, the term "comprises" and/or "includes" used therein mean that one or more other components or addition of elements are not excluded in addition to the described components unless they are differently defined.

In the entire description of the present invention, the wording "divided screens" or "screens being divided" means screens that are obtained by dividing the entire screen provided in a display device, and may also be used as a meaning of "screens of a partial divided region of the entire screen".

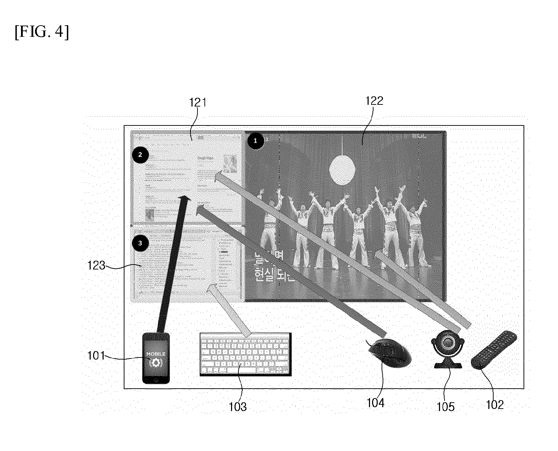

FIG. 4 is a diagram exemplarily illustrating a situation in which divided screens 121, 122, and 123 of a display are independently controlled through a plurality of input devices 101, 102, 103, 104, and 105 according to an embodiment of the present invention.

As illustrated in FIG. 4, the plurality of input devices 101, 102, 103, 104, and 105 may serve to provide various input signals that are suitable to applications, and the divided screens 121, 122, and 123 may be independently controlled by the corresponding input signals. More specifically, the divided screens 121, 122, and 123 may execute at least two kinds of applications, and the respective input devices 101, 102, 103, 104, and 105 may be independently controlled through mapping with the corresponding divided screens according to the applications being executed without mutual collision.

Hereinafter, a system and method for controlling divided screens according to the present invention will be described in detail with reference to the accompanying drawings.

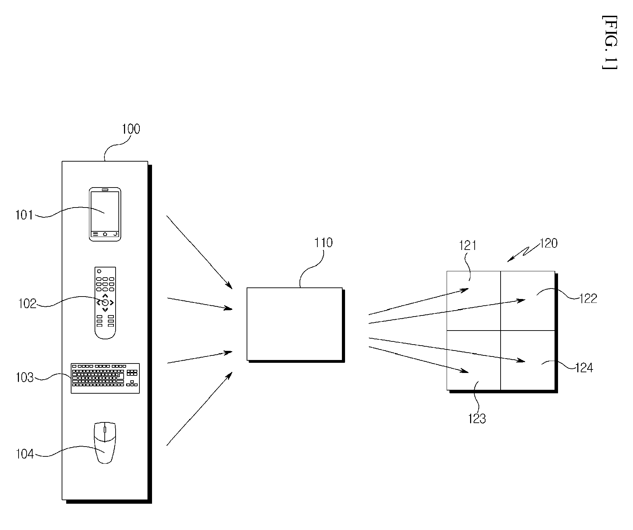

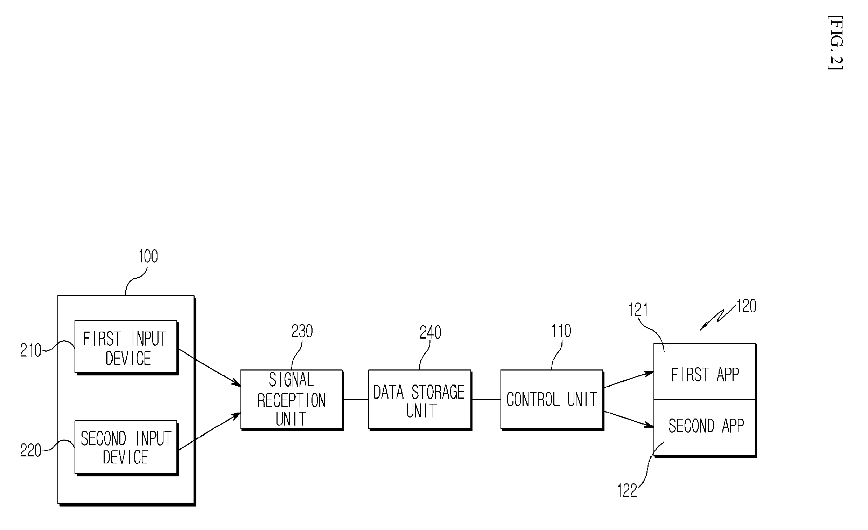

FIG. 1 is an exemplary block diagram illustrating the main configuration of a system for controlling divided screens 120 according to an embodiment of the present invention, and FIG. 2 is a functional block diagram illustrating the configuration of a system for controlling divided screens 120 according to different kinds of input devices according to an embodiment of the present invention. Hereinafter, a system for controlling divided screens 120 through mapping with input devices according to an embodiment of the present invention will be described with reference to FIGS. 1 and 2.

As illustrated in FIG. 1, the system for controlling divided screens 120 independently through mapping with input devices may include an input unit 100 including different input devices, and a control unit 110 configured to determine applications corresponding to input signals received through the input unit 100 and to control the divided screens 120 related to the corresponding applications according to the received input signals.

Here, for explanation of an embodiment of the present invention, four divided screens are illustrated in FIG. 1, but the number of divided screens is not limited thereto. The present invention may be applied to two or more divided screens. Further, for convenience in explanation, the divided screen 120 that is called hereinafter commonly indicate the independently divided screens 121, 122, and 123.

As illustrated in FIGS. 1 and 2, the divided screen 120 is provided in a display device on which an executed application may be displayed. The display device may include at least one of an LCD (Liquid Crystal Display), a TFT LCD (Thin Film Transistor - LCD), an LED (Light Emitting Diode), an OLED (Organic LED), an AMOLED (Active Matrix OLED), a flexible display, a bended display, and a 3D display. Further, the display device may include at least one of a smart TV including such a display, an IPTV, a device provided with a set-top box and a video receiver, and a mobile display device.

Further, the divided screen may display (execute) information that is controlled according to an input signal that is received through the input unit 100. For example, if the divided screen 120 is in a call mode, the divided screen 120 may display a UI (User Interface) or a GUI (Graphical UI) that is related to a call. Further, in the case where an application in a video call mode or a shooting mode is executed, the divided screen 120 may display a captured and/or received image, UI, or GUI.

In an embodiment of the present invention, the divided screen 120 may display execution screens for various functions (or applications) executed in the display device through one or more windows. Further, at least two regions of divided screens 121 and 122 may be provided according to a predefined division method, and each region of the divided screens 120 may be provided as one independent screen.

According to one embodiment of the present invention, the divided screen 120 may support screen display that corresponds to a multi-window environment, and may display execution screens for a plurality of applications through the multi-window that includes the divided regions. In this case, the divided screen 120 may simultaneously display any one window screen and another window screen in parallel. Further, the divided screen 120 may display a separator for separating respective windows that constitute the multi-window, that is, the divided regions, a tray (or application launcher) for effectively and intuitively executing the applications according to a multi-window environment, and a virtual input device (e.g., touch keypad (or floating keypad)) that freely moves in the entire screen region of the divided screen 120.

Further, the divided screen 120 may support screen display through a horizontal mode, screen display through a vertical mode, and screen switching display through a change between the horizontal mode and the vertical mode in accordance with a rotating direction (or putting direction) of the display device.

Further, referring to FIG. 2, a system for controlling divided screens according to the present invention may include an input unit 100, a signal reception unit 230, a data storage unit 240, a control unit 110, and a display device 120. The input unit 100 may include a first input device 210 generating a first input signal for controlling a divided screen on which an application is displayed, and a second input device 220 having an input type that is different from the input type of the first input device 210 and generating a second input signal for controlling a divided screen 210 on which an application that is different from the application of the first input device 210 is displayed.

Here, for convenience in explanation, it is exemplified that the first input signal and the second input signal are generated, but are not limited thereto. According to the present invention, two or more input signals may be received to independently control two or more divided screens.

The input unit 100 generates an input signal for a user to control an application that is displayed (executed) on the divided screen of the display device. The input device included in the input unit 100 may be any one of a remote controller, a keypad, a set-top box, a keyboard, a mouse, a trackball, a scanner, a touchpad, a tablet, a camera, a joystick, a pointing device, and a mobile device.

The signal reception unit 230 may receive signals output from the input devices. The signal reception unit 230 may be a signal reception unit 230 that is built in the set-top box or the display device, or an external signal reception unit 230 receiving the input signals.

Further, the data storage unit 240 may store programs for controlling applications that correspond to the input signals.

The data storage unit 240 may store programs for controlling through the control unit 110, and may perform functions for storage of input/output data (e.g., phone numbers, messages, audios, media content (e.g., music files and moving image files), and applications). In particular, the data storage unit 240 may store division information on screen division types for multimedia operations, executed application information, and application information executed by multitasking through the multi-window. For example, the data storage unit 240 may store control signal codes of the divided screens 120, and if necessary, may provide the stored information to the control unit 110. Further, if signals are input from the input devices illustrated in FIG. 2, the control program may be programmed to control the divided screens 120 in correspondence to the input signals.

Further, the data storage unit 230 may include at least one type storage medium of a memory of a flash memory type, a hard disk type, a micro type, and a card type (e.g., SD card or XD card), and a memory of RAM (Random Access Memory), SRAM (Static RAM), ROM (Read-Only Memory), PROM (Programmable ROM), EEPROM (Electrically Erasable PROM), MRAM (Magnetic RAM), magnetic disk, and optical disk types.

According to an embodiment of the present invention, the control unit 110 controls a series of operations for supporting control functions of the applications that are executed on the divided screen 120. For example, the control unit 110 may control execution of a plurality of applications according to the first input signal and the second input signal that are received from the first input device 210 and the second input device 220 in the divided screen environment, and may control independent display of screens of at least two of the applications being executed on the plurality of screens 120.

Further, the control unit 110 may receive the second input signal from the second input device for executing a second application in a state where an execution screen of the first application that corresponds to the first input signal is entirely displayed on the first divided screen 121, and may display the execution screen of the second application on the second divided screen 122. Accordingly, it becomes possible to determine the applications corresponding to the respective input signal and to independently map the input signals on the divided screens 120 of the display device on which the applications are executed under the control of the control unit 110.

According to an embodiment of the present invention, the control unit 110 may determined whether to independently control or change the divided screens 120 through determination of whether to receive the second input signal in a state where the first input signal is received.

Further, if the second input signal is sensed while the entire screen is controlled by the first input signal, the control unit 110 may be further configured to divide the entire screen that is controlled according to the first input signal into the first divided screen 121 that is controlled according to the first input signal and the second divided screen 122 that is controlled according to the second input signal in response to the second input signal.

Further, according to an embodiment of the present invention, if another input signal for requesting execution of an additional application is received while screens of a plurality of applications are displayed through the divided screens 120, the control unit 110 may control the execution of the additional application through another divided screen 120 that is selected for the execution of the additional application. In this case, the control unit 110 may process the application that is previously executed through the other selected divided screen 120 as a background. Further, the control unit 110 may process the additionally executed divided screen to overlap the existing divided screens. Here, one or more divided screens 120 may be processed as the background, and the size of overlapping may correspond to the entire screen or a part of the divided screen 120.

Further, the control unit 110 may adjust the size and/or position of the divided screen 120 according to the input signal. Specifically, the control unit 110 may control at least one function of screen enlargement, screen reduction, screen movement, and screen rotation. In this case, the screen may mean the entire screen of the display device or may include a part of the divided screen 120.

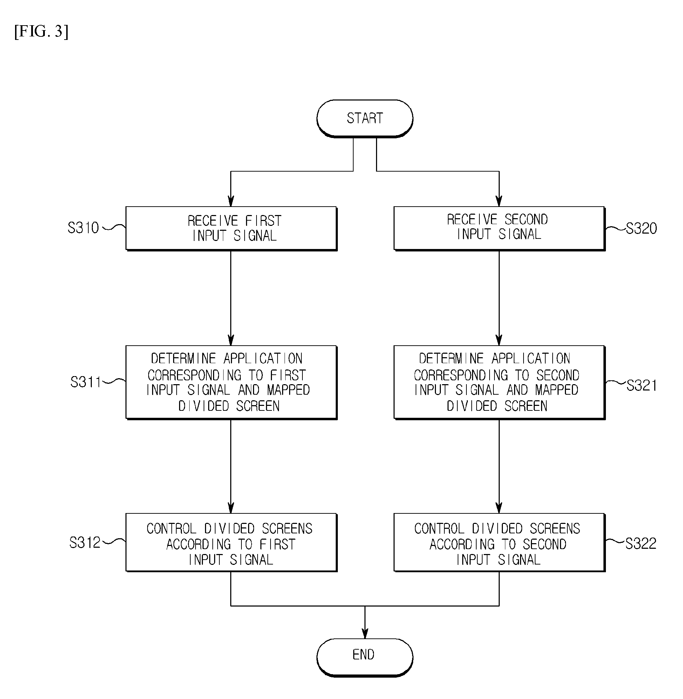

FIG. 3 is a flowchart illustrating a method for controlling divided screens according to different kinds of input signals according to an embodiment of the present invention.

As illustrated in FIG. 3, according to the present invention, a method for controlling divided screens independently through mapping with a plurality of input devices is provided. The method includes receiving a first input signal from the first input device 101 (S310), determining an application corresponding to the first input signal and the first divided screen 121 mapped with the first input signal (S311), receiving a second input signal that is different from the first input signal from the second input device 102 (S320), determining an application corresponding to the second input signal and the second divided screen 122 mapped with the second input signal (S321), and controlling the divided screens independently according to the received input signals (S312 and S322).

The determining of the divided screens (S311 and S321) may further include changing the screen that is controlled by the corresponding input device if the input signal is a screen change input signal.

Further, the determining of the divided screens (S311 and S321) may further include controlling the second divided screen 122 independently of the first divided screen 121 if the second input signal is sensed while controlling the first divided screen according to the first input signal. For example, if the second input signal is sensed while the first input signal is input or after the first input signal is input, the respective applications may be simultaneously or successively executed on the divided screens 120 and may be independently controlled.

Further, according to an embodiment of the present invention, the method may further include determining a predetermined region of the entire screen as the second divided screen 122 in response to the second input signal. Here, the divided screen may include a plurality of screens that are divided into the predetermined regions, and a specific divided screen 120 on which the application can be executed may be determined in response to the user's input signal.

Further, the determined divided screen 120 may be the entire screen or a part of the divided screen. The application through the additionally input signal may be executed on the entire screen or a part of the predetermined divided screen 120 according to the input signal from the input device, and may be changed according to a change input signal from the input device. Further, the positions of the divided screens 120 may be changed to each other according to the input signal from the input device. Through such determination and change functions, the sizes and positions of the divided screens on which the applications are executed may be adaptively changed.

Further, the sizes and/or positions of the divided screens may be adjusted according to the input signal. Specifically, any one operation of screen enlargement, screen reduction, screen movement, and screen rotation may be controlled. In this case, the screen may be the entire screen of the display device or a part of the divided screen.

Further, according to an embodiment of the present invention, the determining of the second divided screen 122 may further include switching the position of the first divided screen 121 with the position of the second divided screen 122 according to the user's input signal.

Through the above-described functions, the sizes or positions of the divided screens on which the applications are executed according to a user's taste can be changed through the convenient user interface.

Although the present invention has been exemplarily described with reference to the above-described embodiments, it will be understood by those of ordinary skill in the art to which the present invention pertains that various modifications and changes in form and detail may be made therein without departing from the spirit and scope of the invention. Accordingly, the above-described embodiments of the present invention are not intended to limit the technical idea of the present invention, but are provided for explanation, and thus the technical idea of the present invention is not limited by the embodiments. The scope of the present invention should be construed by the appended claims, and it should be construed that all technical ideas in the equivalent scope fall within the scope of the present invention.

## Claims

1. A system for controlling divided screens independently through mapping with input devices, comprising:
a signal reception unit (230) configured to receive different input signals from the input devices; and
a control unit (110) configured to determine applications corresponding to respective input signals and to control the divided screens related to the corresponding applications according to the input signals.
wherein the control unit (110) is further configured to control a first divided screen related to an application corresponding to a first input device according to a first input signal from the first input device and to control a second divided screen related to an application corresponding to a second input device that is different from the first input device according to a second input signal from the second input device.

2. The system according to claim 1, wherein the control unit (110) is further configured to control the second divided screen independently of the first divided screen if the second input signal is sensed while controlling the first divided screen according to the first input signal.

3. The system according to claim 1, wherein the control unit (110) is further configured to divide the entire screen that is controlled according to the first input signal into the first divided screen that is controlled by the first input signal and the second divided screen that is controlled by the second input signal in response to the second input signal if the second input signal is sensed while controlling the entire screen according to the first input signal.

4. The system according to claim 1, wherein the control unit (110) is further configured to process the first divided screen that is previously executed as a background and to make the second divided screen overlap the first divided screen to be displayed if the second divided screen is determined.

5. The system according to claim 1, wherein the control unit (110) adjusts sizes or positions of the divided screens according to a divided screen change input signal.

6. The system according to claim 1, wherein the control unit (110) switches the position of the first divided screen with the position of the second divided screen according to a divided screen change input signal.

7. The system according to claim 1, wherein the signal reception unit (230) is built in or is detachably attached to a display device including the divided screens.

8. A method for controlling divided screens independently through mapping with a plurality of input devices, comprising:
receiving a first input signal from a first input device (S310) and determining a first application corresponding to the first input signal and a first divided screen mapped with the first application (S311);
receiving a second input signal that is different from the first input signal from a second input device (S320) and determining a second application corresponding to the second input signal and a second divided screen mapped with the second application (S321); and
controlling the divided screens independently according to the input signals (S312, 322).

9. The method according to claim 8, further comprising changing a mapped divided screen to another divided screen according to a screen change input signal.

10. The method according to claim 8, wherein the controlling further comprises controlling the second divided screen independently of the first divided screen if the second input signal is sensed while controlling the first divided screen according to the first input signal.

11. The method according to claim 8, wherein the determining of the second divided screen further comprises dividing the entire screen that is controlled according to the first input signal into the first divided screen that is controlled by the first input signal and the second divided screen that is controlled by the second input signal in response to the second input signal if the second input signal is sensed while controlling the entire screen according to the first input signal.

12. The method according to claim 8, wherein the determining of the second divided screen comprises processing the first divided screen that is previously executed as a background and making the second divided screen overlap the first divided screen to be displayed if the second divided screen is determined.

13. The method according to claim 8, further comprising adjusting sizes or positions of the divided screens according to a divided screen change input signal.

14. The method according to claim 8, further comprising switching the position of the first divided screen with the position of the second divided screen according to a divided screen change input signal.

15. A computer program having program codes for performing the method of any one of claims 8 to 14 when being executed on a computer.
